# EUROPÄISCHE PATENTSCHRIFT

(11) **EP 2 622 963 B1**
(45) Veröffentlichungstag und Bekanntmachung des Hinweises auf die Patenterteilung: **24.01.2018**
(21) Anmeldenummer: 12153780.7
(22) Anmeldetag: 03.02.2012
(51) Int. Cl.: A22C 21/00

(54) **Anordnung zum beidseitigen seitlichen Ritzen der Haut eines geschlachteten Tierkörpers in aufgesattelter Position, den Tierkörper aufsattelnder Stützkörper einer solchen Anordnung, eine die Anordnung zum Hautritzen verwendende Bearbeitungsmaschine sowie ein entsprechendes Verfahren zum Hautritzen**
Assembly for scratching both sides of the skin of a slaughtered animal in mounted position, support body of such an assembly for mounting the carcass, a processing machine that uses the skin scratching assembly and skin scratching method
Agencement de deux rainures latérales de la peau d'un corps d'animal abattu en position remorquée, corps d'appui d'un tel agencement remorquant le corps d'animal, machine de traitement utilisant l'agencement pour le rainurage de la peau ainsi que procédé associé pour le rainurage de la peau

(43) Veröffentlichungstag der Anmeldung: 07.08.2013
(73) Patentinhaber: Nordischer Maschinenbau Rud. Baader GmbH + Co. KG, 23560 Lübeck (DE)
(72) Erfinder: Landt, Andreas, 23617 Stockelsdorf (DE)
(74) Vertreter: Stork Bamberger Patentanwälte PartmbB

(56) Entgegenhaltungen:
- EP-A1- 0 765 603
- EP-A1- 1 430 780
- US-A- 4 682 386
- US-A- 5 183 434
- US-A- 5 697 837

## Beschreibung

Die Erfindung betrifft eine Anordnung zum beidseitigen seitlichen Ritzen der Haut eines geschlachteten Tierkörpers in auf einem Stützkörper aufgesattelter Position, umfassend einen dem Passieren des Stützkörpers zugeordneten, sich in Durchgangsrichtung erstreckenden Durchgang, gebildet durch ein Paar zumindest im Wesentlichen quer zur Durchgangsrichtung mittels Steuerung bewegbarer Ritzelemente zum Anbringen der Ritze und ein Steuermittel zum Durchführen der Steuerbewegungen. Die Erfindung bezieht sich auch auf eine Bearbeitungsmaschine zum Filetieren von geschlachteten Tierkörpern, insbesondere nämlich von Geflügelkörpern, mit einem in Förderrichtung endlos umlaufend angeordneten, Obertrum und Untertrum bildenden Transportförderer und mit einer Mehrzahl von Bearbeitungsstationen, wobei an dem Transportförderer eine Reihe von Stützkörpern zur Aufnahme jeweils eines Tierkörpers angeordnet ist. Sie ist weiterhin gerichtet auf einen Stützkörper, der zur Ausbildung der Anordnung zum Hautritzen eingerichtet ist. Zudem erfasst die Erfindung ein Verfahren zum beidseitigen längsseitigen Ritzen der Haut von geschlachteten Tierkörpern, die auf einer Reihe von Stützkörpern zur Transportförderung und Bearbeitung aufgesattelt werden, wobei Ritzelemente, die einen Durchgang für die Stützkörper bestimmen und quer zur Förderrichtung der Stützkörper bewegbar sind, zum Herstellen von Längsritzen an Längsseiten der geförderten Tierkörper gesteuert werden.

Die Anordnung zum beidseitigen seitlichen Ritzen der Haut, im Folgenden auch Ritz-Anordnung, kommt üblicherweise in der genannten Bearbeitungsvorrichtung zum Bearbeiten von geschlachteten Tierkörpern zum Einsatz. Tierkörper sind insbesondere Körperteile, vorrangig Vorderhälften und Brustkappen von Geflügel. So ist die Bearbeitungsvorrichtung insbesondere zur Geflügelbe- bzw. -verarbeitung, nämlich zum Filetieren von Brustkappen oder Vorderhälften eingerichtet.

Das Anbringen der beidseitigen seitlichen Hautritze erfolgt vornehmlich, um die Haut nach dem Aufritzen zum Enthäuten erfassen zu können. Unter "Ritzen" ist ein Schnitt oder Einschnitt zu verstehen, der die Haut vollständig durchschneidet, während das Unterhautfettgewebe und die Tierkörper-Karkasse unversehrt bleibt. Das Ritzen nach Art eines Aufschlitzens der Haut zum Enthäuten ist insbesondere dann erforderlich, wenn die Haut des Tierkörpers besonders gespannt, schwer zugänglich und/oder trocken ist, so dass sie mit Enthäutewerkzeugen nicht oder nicht zuverlässig gegriffen werden kann. Zum Beispiel kann die Haut einer Geflügel-Brustkappe an der Atmungsfalte des Tierkörpers zumeist ohne Hilfsmittel ergriffen werden, während dies bei Geflügel-Vorderhälften insbesondere dann, wenn letztere luftgetrocknet sind, nicht oder nicht zuverlässig gelingt. In solchen Fällen hilft man sich damit, eine indirekte Steuerung, die an sich für einen Flügelschnitt vorgesehen ist, dann, wenn der Geflügelschnitt entfallen kann, zum Hautritzen zu nutzen. Eine derartige Steuerung wird mittels einstellbarer Gleitbacken ausgeführt, die kurvengesteuert an einer Basis, nämlich einer Sattelgrundplatte eines Stützkörpers anliegen. Die bekannte Steuerung, die nur bei entfallendem Flügelschnitt genutzt werden kann, ist raumaufwändig, und verwendete Ritzmesser kommen beim Hautritzen teilweise in Kontakt mit Seitenflächen des Stützkörpers. Dies führt zu Verschleiß und Beschädigung.

Aus US 4 682 386 A ist ein Stützkörper zur Ausbildung einer Anordnung zum Hautritzen bekannt. Der bekannte Stützkörper ist zum Aufsatteln und Transportieren eines geschlachteten Geflügelkörpers ausgebildet; er weist eine sattelartige Form mit oberer Sitzfläche und längsseitigen Seitenflächen sowie einen rechteckförmigen Basissockel auf, in dem an gegenüberliegenden Seiten langgestreckte Nuten ausgebildet sind. Die Nuten sitzen gleitbeweglich auf zugehörigen Schienen derart, dass der Stützkörper bei seiner Transportbewegung stabilisiert wird. Stationäre Messerklingen, die mittels Schraubbefestigung verstellbar sind, schneiden an gegenüberliegenden Seiten in das Brustfleisch ein. EP 0 765 603 A1 offenbart eine Vorrichtung zum Filetieren des Bruststücks eines Geflügels. Die Vorrichtung weist stationär angeordnete, entlang von Kurven geführte hakenförmige Messer auf, die beidseitig an dem Bruststück, das auf einem Träger aufgesattelt und gefördert wird, Schnitte zum anschließenden Enthäuten anbringt. Zum Vermeiden von Knochenfragmenten in Geflügelfleisch sind die Messer besonders geformt.

Der Erfindung liegen die Ziele zugrunde, das Hautritzen der genannten Tierkörper wesentlich zu verbessern, indem insbesondere der Raumbedarf einer Anordnung von Elementen und Organen zum Hautritzen besonders klein ist und der Hautschnitt auch bei besonders dünner, trockener und/oder straffer Haut zuverlässig ohne Beschädigung des Ritzelements und des Stützkörpers durchführbar ist. In einer Bearbeitungsmaschine soll das Hautritzen andere Bearbeitungsvorgänge, insbesondere einen Flügelschnitt, nicht verhindern und nicht beeinträchtigen.

Die Ziele der Erfindung werden bei einer Anordnung mit den eingangs genannten Merkmalen dadurch erreicht, dass das Steuermittel gebildet ist durch ein Paar quer zur Durchgangsrichtung bewegbarer, zur Gleitberührung eingerichteter Gleitelemente mit an diesen angeordneten und daran quer zur Durchgangsrichtung hervorstehenden Ritzelementen des Ritzelementepaares sowie durch den Gleitelementen zugeordnete, beidseitig seitlich an den Stützkörpern ausgebildete Steuerflächen, gegen die die Gleitelemente zum Bewirken einer die Weite des Durchgangs ändernden Steuerauslenkung bewegbar sind und mit sich entsprechend der Durchgangsrichtung erstreckenden Längsnuten, in die die hervorstehenden Ritzelemente freigängig zum Vermeiden jeder direkten Berührung mit dem Stützkörper eintauchbar sind. Sie sind stets und bei jeder Steuerauslenkung ohne Berührung mit den Stützkörpern.

Bei einer eingangs genannten Bearbeitungsmaschine, insbesondere zum Filetieren von geschlachteten Geflügelkörpern, wird erfindungsgemäß vorgesehen, dass in einer zum Hautritzen eingerichteten Bearbeitungsstation gemäß der erfindungsgemäßen Ritz-Anordnung das Steuermittel zusammen mit jedem Stützkörper vorgesehen ist, wobei sämtliche Stützkörper mit den Steuerflächen sowie den seitlichen Längsnuten zum Freihalten der Ritzelemente von den Stützkörpern ausgebildet sind.

Ein Stützkörper, der zum Aufsatteln und Transportieren eines geschlachteten Tierkörpers ausgebildet ist und eine sattelartige Form mit oberer Sitzfläche und längsseitigen Seitenflächen aufweist, zeichnet sich erfindungsgemäß dadurch aus, dass er zur Ausbildung der Ritz-Anordnung zum Hautritzen eingerichtet ist, wobei wenigstens ein Abschnitt jeder längsseitigen Seitenfläche als Steuerfläche ausgebildet ist, die eine Anlagefläche für ein ein Ritzelement haltendes Gleitelement bildet, und wobei zugehörig zur genannten Steuerfläche in wenigstens einem Abschnitt jeder längsseitigen Seitenfläche eine Längsnut ausgebildet ist, in die das genannte Ritzelement insbesondere bei direkter Anlage des genannten Gleitelements gegen die zugehörige Steuerfläche berührungslos einfassen kann. Die sattelartige Form entspricht zumindest teilweise der Innenform des Geflügelkörpers. Die Steuerflächen entsprechen zumindest im Wesentlichen der äußeren Karkassenform mit und längs zu ritzender Haut.

Ein den Funktionen der körperlichen Merkmale der Erfindung entsprechendes erfindungsgemäßes Verfahren zum beidseitigen längsseitigen Ritzen der Haut ist dadurch gekennzeichnet, dass der Ritz an jeder Längsseite des Tierkörpers parallel zu einer Anlagespur eines entlang dieser Anlagespur auf der Außenseite des Tierkörpers gleitenden Gleitelements angebracht wird und dass mittels jedes Gleitelements das zugehörige Ritzelement derart gehalten und geführt wird, dass es bei sich verändernder Größe des Durchgangs stets von dem Stützkörper freigehalten wird, wobei es in einen mit dem Ritz deckungsgleich verlaufenden Luftspalt berührungsfrei eintauchen kann. Das Ritzelement wird derart geführt, dass es zumindest bei nicht mit Tierkörpern bestückten Stützkörpern in den mit dem anzubringenden Ritz deckungsgleich verlaufenden Luftspalt vorzugsweise entlang jedenfalls des größten Teils seiner Gesamtlänge berührungsfrei eintaucht.

Mit den erfindungsgemäßen Maßnahmen erreicht man eine Reihe von Vorteilen. Die erfindungsgemäße Ritz-Anordnung zeichnet sich insbesondere dadurch aus, dass der Schnitt zum Hautritzen in der Tiefe angepasst und begrenzt ist, wobei die Haut zuverlässig durchtrennt wird, hingegen ein Unterhautfettgewebe oder auch die Karkasse von dem Hautschnitt frei bleiben. Es wird zuverlässig sichergestellt, dass das Ritzelement frei von jedem Kontakt mit dem Stützkörper bleibt. Verschleiß und Beschädigung werden vermieden. Die Gleitelemente gelangen bei nicht beschicktem Stützkörper und möglicherweise vor Beginn und/oder nach dem Ende des Ritzvorgangs direkt gegen die Steuerflächen des Stützkörpers. Sie setzen während des Ritzens auf die Haut des zu schneidenden Tierkörpers auf, wobei die Steuerfläche unter Zwischenlage der Tierkörperkarkasse mit Gewebe und Haut eine führende Gegenanlage für die Gleitelemente bildet. Dabei ist wesentlich, dass die Querbewegung der Ritzelemente in Anpassung an die aufgesattelte Karkasse und die darauf befindliche Außenschicht erfolgt, wobei die Querbewegung der Ritzelemente zum Ritzen der tatsächlichen Kontur bzw. der Oberflächenstruktur des Tierkörpers folgt. Infolgedessen ist die Steuerung direkt und unmittelbar. Die Steuerflächen entsprechen zumindest im Wesentlichen der äußeren Karkassenform mit und längs zu ritzender Haut. Damit entspricht auch die steuernde Anlagespur, entlang der das zugehörige Gleitelement auf der Tierkörperaußenseite gleitet, der Körperform längs zu ritzender Haut. Die Ritzelemente können an den Gleitelementen auch relativ weit hervorstehen, wobei sie vor und/oder nach dem Hautritzen lediglich in die Längsnut ohne Berührung mit dem Stützkörper, also nur in einen Luftspalt eintauchen. Dies kann zum Beispiel der Fall sein, wenn ein Bereich zu ritzender Haut von Ritzelementen noch nicht erreicht bzw. verlassen worden ist. Gleichermaßen und insbesondere ist jede Beschädigung der Ritzelemente und der Stützkörper zuverlässig vermieden, wenn auf dem Stützkörper kein Tierkörper aufgesattelt ist, der Stützkörper also im Leerbetrieb durch den Durchgang in Durchgangsrichtung hindurchgeht. Die genannten Vorteile der erfindungsgemäßen Anordnung resultieren entsprechend in Bezug auf die erfindungsgemäße Bearbeitungsmaschine, den erfindungsgemäßen Stützkörper sowie das erfindungsgemäße Verfahren.

Mittel, Elemente und/oder Teile der Anordnung, nämlich insbesondere des Steuermittels, zum Beispiel eine Rückstelleinrichtung und/oder Schwenkeinrichtung mit den Gleitelementen, sind an einer Konsole, an einem Gestell, Rahmen oder dergleichen Tragelementen gelagert.

Eine besonders raumsparende Anordnung erreicht man dadurch, dass die Steuerflächen an dem Stützkörper im Bereich zu ritzender Haut aufsattelbarer Tierkörper ausgebildet sind. Vorteilhaft grenzen dann die Steuerflächen des Stützkörpers an die Längsnuten an, wobei sie an Längsränder der Längsnuten angrenzen oder durch solche Längsränder gebildet sind.

Das Steuermittel zur Gleitanlage der Gleitelemente lässt sich besonders raumsparend und -nutzend mit Rückstelleinrichtungen ausstatten, die Anlage- und Rückstellkraft erzeugen und mit den beiden Gleitelementen zugehörig verbunden sind. Vorteilhaft umfasst wenigstens eine genannte Rückstelleinrichtung eine Schwenkeinrichtung mit einer Schwenkachse, um die das zugehörige Gleitelement zur Gleitanlage schwenkbar gehalten ist.

Das Gleitelement kann in Verbindung mit dem zugehörigen Ritzelement besonders gezielt und definiert auf die zu ritzende, d. h. zu durchschneidende Haut eingestellt werden. So können Gleitelemente und Ritzelemente derart eingerichtet sein, dass die Ritzelemente jeweils über Gleitflächen der Gleitelemente hinaus nach Maßgabe der Dicke zu ritzender Haut des Tierkörpers hervorstehen.

Zweckmäßig ist das Steuermittel mit wenigstens einem Einstellmittel zum Einstellen einer Basisbreite des Durchgangs eingerichtet, von der ausgehend die Durchgangsbreite nach Maßgabe der Steuerauslenkung vergrößerbar ist. Mit Einstellung der Basisbreite können insbesondere Beginn und Ende des Ritzvorgangs eingestellt werden. Es kann eine Anpassung auf die Geometrie der Tierkörper erfolgen.

Eine Ausgestaltung besteht darin, dass die Gleitelemente die Ritzelemente in Bezug auf eine Sattelhöhe des Stützkörpers in einer Höhe tragen, die den Atmungsfalten aufsattelbarer Tierkörper zugeordnet ist. Einerseits nutzt man die Atmungsfalten, um die Haut in einem Bereich zu schneiden, der zum Erfassen der Haut mit Enthäutewerkzeugen seitlich hervorsteht bzw. gut zugänglich ist, und andererseits erfolgt eine definierte Trennung zum Rückenenthäuten und Brustenthäuten, die nach dem Hautritzen mit einer erfindungsgemäßen Bearbeitungsmaschine bzw. gemäß dem erfindungsgemäßen Verfahren durchgeführt werden können.

Insbesondere werden die Hautritze angebracht, um unmittelbar anschließend wenigstens eine Hautabtrennung durchzuführen. Die Bearbeitungsmaschine umfasst dann wenigstens eine Enthäutevorrichtung, die der Bearbeitungsstation zum Hautritzen in Förderrichtung der Bearbeitungsmaschine bzw. in Durchgangsrichtung des Durchgangs nachgeordnet ist.

Der erfindungsgemäße Stützkörper steht aufgrund der erfindungsgemäßen Anordnungen in besonderer Beziehung mit dem Steuermittel. Eine erfindungsgemäße Gestaltung des Stützkörpers besteht darin, dass die Steuerflächen des Stützkörpers im Bereich zu ritzender Haut aufsattelbarer Tierköper ausgebildet sind. Zweckmäßig grenzen die Steuerflächen des Stützkörpers an Längsränder der Längsnuten an.

Insbesondere bauchig konvex geformte längsseitige Seitenflächen des Stützkörpers eignen sich zur Ausbildung der Längsnut mit genauer Zuordnung zu Hautritzen bzw. Ritzelementen. Eine Längsnut kann durch eine wenigstens im Wesentlichen gerade, durch den bauchigen Bereich durchgehende spaltartige Ausnehmung gebildet sein.

Eine besondere Gestaltung des Stützkörpers, der zum Aufsatteln eines Geflügelkörpers in Form einer Geflügelvorderhälfte eingerichtet und ausgebildet ist, besteht darin, dass die Längsnuten an den längsseitigen Seitenflächen des Stützkörpers in Höhe der Atmungsfalten der aufsattelbaren Vorderhälften angeordnet sind. Während eine Geflügel-brustkappe im Wesentlichen aus dem Teil der Geflügelbrust besteht, in dem sich der Kielknochen, die Schlüsselbeine und die Rabenschnabelfortsätze befinden, umfasst die Geflügelvorderhälfte zusätzlich einen Schulterbereich mit einem Teil der Wirbelsäule und freien Rippen. Mit diesen Skelettteilen wird im vordersten Bereich der Vorderhälfte eine Vertiefung umschlossen. Der Stützkörper ist mit einem Teil, insbesondere einem Sattelhorn ausgebildet, der in die Vertiefung des aufgesattelten Geflügelkörpers einfasst.

Besonders vorteilhaft ist es, dass mit dem erfindungsgemäßen Verfahren die Haut von getrockneten, zumeist luftgetrockneten Tierkörpern, insbesondere Geflügelvorderhälften, definiert und mit relativ großer Bearbeitungsgeschwindigkeit geritzt werden kann. Durch Trocknung gespannte Haut erfordert das Ritzen (Schneiden), um sie zum Enthäuten erfassen zu können.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene unter die Erfindung fallende Ausführungen und Gestaltungen zu verstehen.

Es zeigen
- Fig. 1: in axonometrischer Darstellung eine erfindungsgemäße Anordnung sowie einen erfindungsgemäßen Stützkörper zum beidseitigen seitlichen Ritzen der Haut eines geschlachteten Tierkörpers,
- Fig. 2A bis 2C: in Draufsicht und Rückansicht eine erfindungsgemäße Anordnung entsprechend Fig. 1, im Wesentlichen gebildet durch einen erfindungsgemäßen Stützkörper und einen Teil einer zugehörigen Steuereinrichtung und
- Fig. 3: eine erfindungsgemäße Bearbeitungsmaschine mit einer Bearbeitungsstation zum Hautritzen, die mit einer Anordnung gemäß Fig. 1 bis 2C versehen ist.

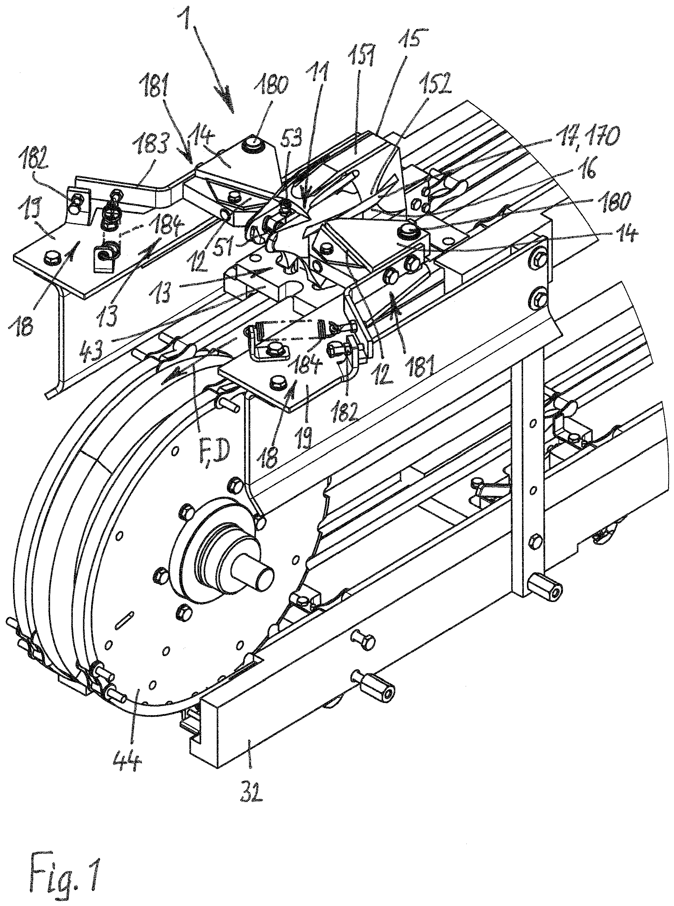

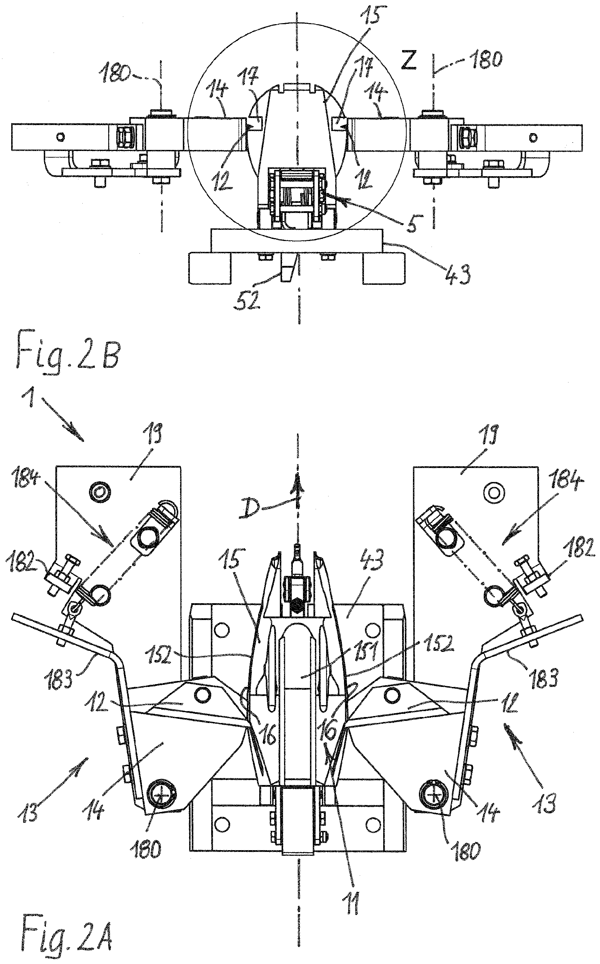

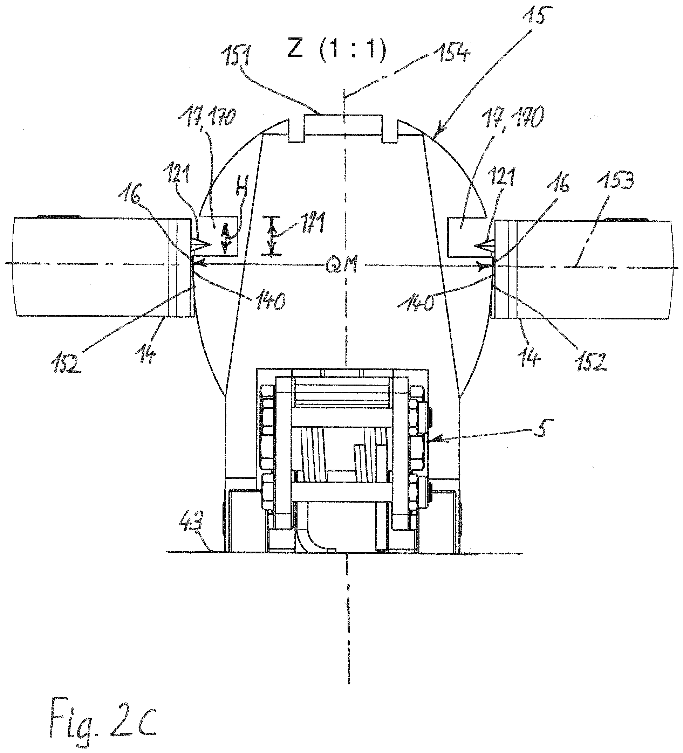

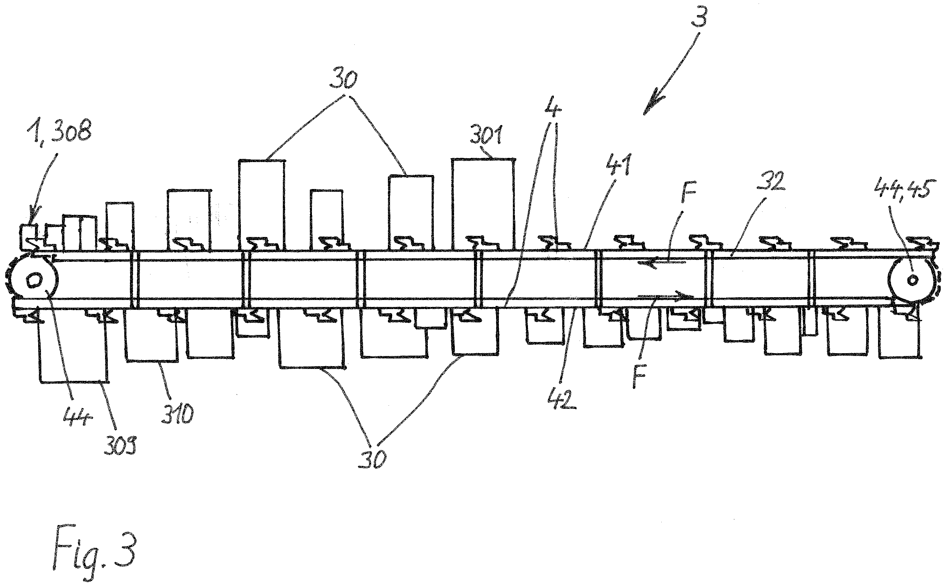

In Fig. 1 ist eine erfindungsgemäße Anordnung 1 dargestellt, die zum Beispiel in einer Bearbeitungsstation 308 einer Bearbeitungsmaschine 3 verwirklicht ist. Ein Beispiel einer Bearbeitungsmaschine 3, die noch näher beschrieben wird, ist in Fig. 3 dargestellt. Dort befindet sich die Bearbeitungsstation 308 am Ende eines Obertrums 41 eines Transportförderers 4. Wesentliche Elemente der Anordnung 1 gehen zudem aus Fig. 2A bis 2C hervor. Fig. 2C stellt ein Detail Z der Fig. 2A dar.

Die Anordnung 1 umfasst einen Durchgang 11 und einen Stützkörper 15, der zum Hindurchlaufen durch den Durchgang 11 und zum Zusammenwirken mit dem Durchgang 11 ausgebildet ist. Die Anordnung 1 ist derart, dass der Stützkörper 15 mit einem Vorderteil, nämlich einem Sattelhorn, voraus den Durchgang 11 in Förderrichtung F, die dort der Durchgangsrichtung D des Durchgangs 11 entspricht, passieren kann.

In Fig. 1 ist der Stützkörper 15 beispielhaft in einer ersten Position dargestellt, die er erreicht, nachdem das Vorderteil des Stützköpers 15 den Durchgang 11 passiert hat. Die Fig. 2A bis 2C zeigen den Stützkörper 15 beispielhaft in einer zweiten Position, die er mit einem hinteren Teil durchläuft, der sich in dem Durchgang 11 befindet und längsseitig maximal ausbaucht.

Der Stützkörper 15 ist in Form eines Sattels ausgebildet und mit einer Sattelgrundplatte verbunden, mittels der er an dem Transportförderer 4 befestigbar ist. Eine solche Sockelplatte 43 wird an einem Gestell 32 der Bearbeitungsmaschine 3 geführt, wobei der Transportförderer 4 unter horizontaler Ausrichtung von Obertrum 41 bzw. Untertrum 42 sowie in senkrechten Umlenkebenen gelagert und zum umlaufenden Antrieb eingerichtet ist. Insbesondere kann der Stützkörper 15 mit der Sockelplatte 43 mittels einer nicht dargestellten Schnellverbindung verbindbar sein.

Wie insbesondere aus Fig. 2B ersichtlich, weist der Stützkörper 15 im Querschnitt einen U-förmigen Raum auf, der eine Klemmeinrichtung 5 aufnimmt. Diese ist mit einem Klemmhebel 51 (Fig. 1) sowie einem Auslösehebel 52 (Fig. 2B) ausgestattet.

Der Stützkörper 15 ist in an sich bekannter Weise zum Aufsatteln eines nicht dargestellten geschlachteten Tierkörpers, nämlich im Ausführungsbeispiel der Vorderhälfte eines Geflügelkörpers ausgebildet. In aufgesattelter Position kommt die Vorderhälfte mit Innenteilen an Sattelstützflächen, nämlich an oberer Sitzfläche 151 und längsseitigen Seitenflächen 152 zu liegen, und sie wird mittels der Klemmeinrichtung 5 gesichert, wobei das freie Ende des Klemmhebels 51 gegen die Brustbeinplatte der Geflügel-Vorderhälfte bzw. gegen den Stützkörper 15, zum Beispiel einen daran befestigten federnden Bolzen 53 oder dergleichen arbeitet. Ein nicht dargestellter Klemm-Steuermechanismus, der das an der Sockelplatte 43 hervorstehende Auslöseelement 52 aufweist, öffnet bzw. schließt die Klemmeinrichtung 5 zum Beschicken sowie zur Abgabe. Die insoweit vorstehend beschriebenen Elemente und Funktionen des Stützkörpers bzw. der Verbindung mit dem Transportförderer 4 sowie entsprechende Konstruktionen und Mechanismen, die sehr vielfältig sein können, sind üblich und bekannt.

Wesentliche erfindungsgemäße Merkmale des Stützkörpers 15 bestehen darin, dass jede längsseitige Seitenfläche 152 mit einer einen Luftspalt 170 bildenden Längsnut 17 ausgebildet ist. Die Längsnut 17 erstreckt sich in einem im Stützkörperquerschnitt längsseitig nach außen konvex gewölbten Abschnitt des Stützkörpers 15. Die Stützkörperfläche kann dort auch anders gestaltet sein, z. B. flach und/oder teilweise zurückspringend. Ein weiteres wesentliches Merkmal besteht darin, dass jeder Längsnut 17 eine zugehörige Steuerfläche 16 an jeder Seitenfläche 152 zugeordnet ist, wobei sich die Steuerfläche 16 mit der Längsnut 17 längs erstreckt. Die Steuerfläche 16 ist durch einen streifenartigen oder linienartigen Oberflächenabschnitt des Stützkörpers 15 gebildet. Im Ausführungsbeispiel grenzt sie förder- oder trumseitig an die Längsnut 17 an, so dass sie durch einen trumseitigen Rand der Längsnut 17 gebildet ist. Diese Gestaltung ist allgemein besonders vorteilhaft.

Eine horizontale Mittenebene 153 befindet sich in Parallelausrichtung mit der Sockelplatte 43 bzw. einer Förder- oder Durchgangsebene. Die Mittenebene 153 kann, bedingt durch die konvexe Form des Stützkörpers 15, durch einen in der Mittenebene liegenden maximalen Querschnittsdurchmesser QM des Stützkörpers 15 im Durchgangsbereich definiert sein (Fig. 2C).

Jede Steuerfläche 16 des Steuerflächenpaars befindet sich an der zugehörigen Seitenfläche 152 in Seiten-/Sattelhöhe des Querschnittdurchmessers QM. Gemäß der beschriebenen Ortslage befinden sich die Längsnuten 17 auf der Sitzseite des Stützkörpers 15 im Bereich zwischen der oberen Sitzfläche 151 und dem Querschnittdurchmesser QM, an den sie angrenzen. Die Längsnuten 17 sind mit diesen Positionen bzw. Anbringungsstellen den Atmungsfalten der mit dem Stützkörper 15 aufsattelbaren Geflügel-Vorderhälfte zugeordnet.

Der Stützkörper 15 weist eine sich in seiner Längsrichtung erstreckende vertikale Mittenebene 154 auf, die zu der horizontalen Mittenebene 153 senkrecht steht. Der Stützkörper 15 ist mit seinen erfindungswesentlichen Teilen in Bezug auf die vertikale Mittenebene 154 symmetrisch ausgebildet.

Das Paar der Steuerflächen 16 und das Paar der Längsnuten 17 sind Bestandteile eines Steuermittels 13 der Anordnung 1, wobei sie mit weiteren Elementen des Steuermittels 13 korrespondieren, nämlich mit Gleitelementen 14 und Ritzelementen 12.

Die Gleitelemente 14 sind den Steuerflächen 16 zugeordnet. Sie sind an stationären Konsolen 19 gelagert, die im Ausführungsbeispiel plattenförmig sind, und zwar in horizontaler, zur Ebene der Sockelplatte 43 paralleler Lage im Bereich des Durchgangs 11. Stattdessen können die Gleitelemente 14 in jeder anderen Weise an einem Gestell, zum Beispiel auch einem Teil eines Gestells 32, der Anordnung 1 gelagert sein. Die Konsolen 19 können Bestandteile eines Gestells, eines Rahmens oder dergleichen Tragkörpers sein.

Das Paar der Gleitelemente 14 und das Paar der daran befestigen Ritzelemente 12 bilden den Durchgang 11. Dieser ist je nach Schwenkpositionen der Gleitelemente 14 um Schwenkachsen 180 einer Schwenkeinrichtung 181 in seiner Weite veränderbar.

Jedes Gleitelement 14 ist mit einer Gleitfläche 140 versehen, die in Höhe der zugehörigen Steuerfläche 16 liegt und letzterer zugewandt ist. Jedes Ritzelement 12 weist eine Schneide 121 auf, die in die zugehörige Längsnut 17 freigängig eintauchen kann. Jedes Ritzelement 12 ist starr an dem zugehörigen Gleitelement 14 befestigt.

Jede Schwenkeinrichtung 181 ist so gestaltet, dass die Schwenkachse 180 in Durchgangsrichtung D bzw. in Förderrichtung F im Bereich vor dem Durchgang 11 bzw. vor den Gleitelementen 14 und den Ritzelementen 12 angeordnet ist.

Jede Schwenkeinrichtung 181 ist Bestandteil einer Rückstelleinrichtung 18. Diese umfasst einen winkligen Hebelarm 183, der fest, z. B. in Schraubverbindung, mit dem Gleitelement 14 verbunden ist und sich, in Förder-/Durchgangsrichtung F, D betrachtet, in den Bereich hinter dem Durchgang 11 mit einem freien Ende erstreckt. An der Konsole 19 oder einem anderen Gestellteil ist ein Einstellmittel 182, z. B. in Form einer verstellbaren Anschlagschraube angebracht, gegen die das freie Ende des Hebelarms 183 in einer Ausgangsposition anliegt. Die grundsätzlich gleichen Ausgangspositionen der beiden Gleitelemente 14 definieren eine Basis-Durchgangsweite des Durchgangs 11, wenn sich kein Stützkörper 15 in dem Durchgang 11 befindet und infolgedessen keine Auslenkung erfolgt. Die Rückstelleinrichtung 18 umfasst weiterhin ein Rückstellmittel 184 in Form einer Zugfeder, die einerseits an dem freien Ende des Hebelarms 183 und andererseits an der Konsole 19 befestigt und so angeordnet ist, dass das Gleitelement 14 mittels des Hebelarms 183 und des Einstellmittels 182 in der zur Basis-Durchgangsweite führenden Ausgangsposition gehalten wird. Aus dieser heraus ist es um die Schwenkachse 180 unter Vergrößerung der Durchgangsweite herausschwenkbar, wenn ein Stützkörper 15 den Durchgang 11 passiert. Dies geschieht aufgrund der erfindungsgemäßen Anordnung mittels der durch die Elemente des Steuermittels 13 bewirkten Steuerauslenkung.

In Fig. 1 bis 2C ist ein Sattelkörper 15 dargestellt, der durch den Durchgang 11 hindurch geht, ohne dass ein Tierkörper aufgesattelt ist. In der oben genannten ersten Position gemäß Fig. 1 treffen die Gleitflächen 140 der Gleitelemente 14 auf die Steuerflächen 16 auf, und die Gleitelemente 14 schwenken gegen die Rückstellkraft der Rückstelleinrichtung 18 zunehmend auf, wenn der sich mit der konvexen Wölbung verbreiternde Stützkörper 15 durch den Durchgang 11 hindurchgeht bzw. die Gleitflächen 140 auf den zugehörigen Steuerflächen 16 auflaufen. In der oben beschriebenen zweiten Position gemäß Fig. 2A bis 2C sind die Gleitelemente 14 unter Rückstellkraft-Anlage der Gleitflächen 140 gegen die Steuerflächen 16 weitgehend aufgesteuert, so dass anschließend eine Bewegungsumkehr stattfindet, in dem die Gleitelemente 14 unter Wirkung der zugehörigen Rückstellkraft in die genannte Ausgangsposition zurückschwenken, wenn sich der Stützkörper 15 fortbewegt und den Durchgang 11 verlässt.

Man erkennt, dass die Schneiden 121, mit denen die Ritzelemente 12 an den Gleitelementen 14 hervorstehen, während des vorstehend beschriebenen Steuervorgangs, bei dem die Gleitelemente 14 direkt gleitend an den Steuerflächen 16 anliegen, in die Längsnuten 17 eintauchen, wobei sie frei von jeder Berührung mit dem Stützkörper 15 bleiben. Die Längsnuten 17 bilden jeweils den Luftspalt 170 mit Spaltweite 171.

Vorteilhaft kann wenigstens eines der Ritzelemente 12 quer zur Durchgangsrichtung D und quer zur horizontalen Mittenebene 153 oder zu einer entsprechenden Lager- oder Halteebene einer Halteeinrichtung, z. B. den Konsolen 19, und damit in einer der Spaltweite 171 entsprechenden Richtung H höhenverstellbar sein, und zwar mit einer nicht dargestellten Höhen-Verstelleinrichtung. Diese kann derart eingerichtet sein, dass das Ritzelement 12 in seiner Abstandsposition in Bezug auf die Lager-/Halteebene relativ zu dem zugehörigen Gleitelement 14 und/oder zusammen mit dem Gleitelement 14 veränderbar und feststellbar ist. Man erreicht mit einem solchen Einstellmittel eine einfache Lageanpassung des Ritzelementes 12 an die Position des zu schneidenden Hautritzes. Beim Verstellen nur des Ritzelements 12 relativ zu dem Gleitelement 14 bleibt die Höhenlage des Gleitelements 14 relativ zur Steuerfläche 16 und damit seine Anlagespur unverändert.

Die in Fig. 3 dargestellte Bearbeitungsmaschine 3 umfasst am Obertrum 41 eine Ladestation 301, in der in Reihe aufeinanderfolgende Stützkörper 15 jeweils mit einer nicht dargestellten Geflügel-Vorderhälfte beschickt werden. Die beschickten Stützkörper 15 durchlaufen am Obertrum 41 in Förderrichtung F einige Bearbeitungsstationen 30, um bestimmte Schnitte durchzuführen. Die luftgetrockneten Geflügel-Vorderhälften werden dann durch die Bearbeitungsstation 308 am Ende des Obertrums 41 geführt, um trockene gespannte Haut der Vorderhälften in Höhe ihrer Atmungsfalten durch Ritzen zu durchtrennen. Der Trum-Transportförderer 4 wird mittels eines nicht näher dargestellten Antriebs 45 umlaufend angetrieben. Am Anfang des Untertrums 42, unmittelbar nach der Trumumlenkung mittels einer Umlenkrolle 44, befinden sich Bearbeitungsstationen 309, 310, in denen die Geflügel-Vorderhälften enthäutet werden. Das Anbringen der genannten Hautritze in der Bearbeitungsstation 308 dient dem Vorbereiten des Enthäutens. In der Bearbeitungsstation 309 erfassen nicht dargestellte Enthäutewerkzeuge durch das Ritzen erzielte Hautbereiche, um die Geflügel-Vorderhälfte rückenseitig zu enthäuten, während in der Bearbeitungsstation 310 gleichermaßen das Enthäuten an der Brustseite der Geflügel-Vorderhälfte durchgeführt wird.

Zum Herstellen der Ritze werden in der Bearbeitungsstation 308 die quer zur Förderrichtung F bewegbaren Ritzelemente 12 mit dem anhand der Fig. 1 bis 2C beschriebenen Steuermittel 13 gesteuert. An jeder Längsseite der Geflügel-Vorderhälfte wird der Ritz parallel zu einer Anlagespur des entlang dieser Anlagespur auf der Außenseite der Geflügel-Vorderhälfte gleitenden Gleitelements 14 angebracht. Dabei wird die Haut durch Ritzen durchtrennt, und zwar mit einer Schnitttiefe, die durch das Maß bestimmt ist, mit dem die Ritzelemente 12 jeweils an den zugehörigen Gleitelementen 14 hervorstehen, wobei das Ritzelement 12 nach Maßgabe der direkten Steuerung des Gleitelements 14 mittels der Vorderhälften-Oberflächenkontur, an der es anliegt, von der Steuerfläche 16 bzw. dem Luftspalt 170 distanziert gehalten wird. Das Herstellen der Hautritze erfolgt selbsttätig, indem die Gleitelemente 14 beim Durchgang des Stützkörpers 15 mit der aufgesattelten Geflügel-Vorderhälfte durch den Durchgang 11 auf die Außenseiten der Geflügel-Vorderhälften auflaufen und daran mittels der Wirkung der Rückstelleinrichtungen 18 im Bereich der zu ritzenden Haut anliegen, so dass die genannten Anlagespuren erzielt werden. Während dieses Anliegens, d. h. auch bei gesteuerter Rückbewegung der Ritzelemente 12, werden die Ritze geschnitten. Zudem wird mittels jedes Gleitelements 14 das zugehörige Ritzelement 12 derart gehalten und geführt, dass es in Abhängigkeit von der Größe des Durchgangs 11 in den mit dem Ritz deckungsgleich verlaufenden Luftspalt 170, gebildet durch die Längsnut 17, berührungsfrei eintauchen kann. Während des normalen Hautritzens findet dieses Eintauchen nicht statt. Es ist aber wesentlich, dass dann, wenn Fehlstellen auftreten sollten oder ein Stützkörper 15 bzw. die Stützkörper 15, die den Durchgang 11 passieren, nicht beschickt sind, erfindungsgemäß der Luftspalt 170 zur Wirkung kommt, indem er die Ritzelemente 12 bzw. deren Schneiden 121 freigängig aufnimmt.

Im Anschluss an die Bearbeitungsstation 310 folgt am Untertrum 42 der Bearbeitungsmaschine 3 eine Reihe weiterer Bearbeitungsstationen 30, mit denen in an sich bekannter Weise die Geflügel-Vorderhälften durch Abschaben des Fleisches filetiert werden.

## Patentansprüche

1. Anordnung (1) zum beidseitigen seitlichen Ritzen der Haut eines geschlachteten Tierkörpers in auf einem Stützkörper (15) aufgesattelter Position, umfassend einen dem Passieren des Stützkörpers (15) zugeordneten, sich in einer Durchgangsrichtung (D) erstreckenden Durchgang (11), gebildet durch ein Paar quer zur Durchgangsrichtung (D) mittels Steuerung bewegbarer Ritzelemente (12) zum Anbringen der Ritze und ein Steuermittel (13) zum Durchführen der Steuerbewegungen, wobei das Steuermittel (13) gebildet ist durch ein Paar quer zur Durchgangsrichtung (D) bewegbarer, zur Gleitberührung eingerichteter Gleitelemente (14) mit an diesen angeordneten und daran quer zur Durchgangsrichtung (D) hervorstehenden Ritzelementen (12) des Ritzelementepaares, durch den Gleitelementen (14) zugeordnete, beidseitig seitlich an dem Stützkörper (15) ausgebildete Steuerflächen (16), gegen die die Gleitelemente (14) zum Bewirken einer die Weite des Durchgangs (11) ändernden Steuerauslenkung bewegbar sind, sowie durch beidseitig seitlich an dem Stützkörper (15) ausgebildete, sich entsprechend der Durchgangsrichtung (D) erstreckende und den Ritzelementen (12) zugeordnete Längsnuten (17), in die die hervorstehenden Ritzelemente (12) freigängig eintauchbar sind.

2. Anordnung nach Anspruch 1, **dadurch gekennzeichnet, dass** die Steuerflächen (16) an dem Stützkörper (15) im Bereich zu ritzender Haut aufsattelbarer Tierkörper ausgebildet sind.

3. Anordnung nach Anspruch 1 oder 2, **dadurch gekennzeichnet, dass** die Steuerflächen (16) des Stützkörpers (15) an die Längsnuten (17) angrenzen.

4. Anordnung nach einem der Ansprüche 1 bis 3, **dadurch gekennzeichnet, dass** das Steuermittel (13) zur Gleitanlage der Gleitelemente (14) Anlage- und Rückstellkraft erzeugende, mit den beiden Gleitelementen (14) zugehörig verbundene Rückstelleinrichtungen (18) umfasst.

5. Anordnung nach Anspruch 4, **dadurch gekennzeichnet, dass** wenigstens eine genannte Rückstelleinrichtung (18) eine Schwenkeinrichtung (181) mit einer Schwenkachse (180) umfasst, um die das zugehörige Gleitelement (14) zur Gleitanlage schwenkbar gehalten ist.

6. Anordnung nach einem der Ansprüche 1 bis 5, **dadurch gekennzeichnet, dass** das Steuermittel (13) mit wenigstens einem Einstellmittel (182) zum Einstellen einer Basis-Durchgangsweite des Durchgangs (11) eingerichtet ist, von der ausgehend die Durchgangsweite nach Maßgabe der Steuerauslenkung vergrößerbar ist.

7. Anordnung nach einem der Ansprüche 1 bis 6, **dadurch gekennzeichnet, dass** die Gleitelemente (14) die Ritzelemente (12) in Bezug auf eine Sattelhöhe des Stützkörpers (15) in einer Höhe tragen, die den Atmungsfalten aufsattelbarer Tierkörper zugeordnet ist.

8. Anordnung nach einem der Ansprüche 1 bis 7, **dadurch gekennzeichnet, dass** wenigstens ein Ritzelement (12) höhenverstellbar in einer einer Spaltweite (171) der zugeordneten Längsnut (17) entsprechenden Richtung ist.

9. Anordnung nach einem der Ansprüche 1 bis 8, **dadurch gekennzeichnet, dass** die Gleitelemente (14) Gleitflächen (140) aufweisen, über die hinaus die Ritzelemente (12) jeweils nach Maßgabe der Dicke der zu ritzenden Haut des Tierkörpers hervorstehen.

10. Bearbeitungsmaschine (3) zum Filetieren von geschlachteten Tierkörpern, nämlich von Geflügelkörpern, mit einem in Förderrichtung (F) endlos umlaufend angeordneten, Obertrum (41) und Untertrum (42) bildenden Transportförderer (4) und mit einer Mehrzahl von Bearbeitungsstationen (30), wobei an dem Transportförderer (4) eine Reihe von Stützkörpern (15) zur Aufnahme jeweils eines Geflügelkörpers angeordnet ist, **dadurch gekennzeichnet, dass** in einer zum Hautritzen eingerichteten Bearbeitungsstation (308) gemäß der Anordnung nach einem der Ansprüche 1 bis 9 das Steuermittel (13) zusammen mit jedem Stützkörper (15) vorgesehen ist, wobei sämtliche Stützkörper (15) mit den Steuerflächen (16) sowie den seitlichen Längsnuten (17) zum Freihalten der Ritzelemente (12) von den Stützkörpern (15) ausgebildet sind.

11. Bearbeitungsmaschine nach Anspruch 10, **dadurch gekennzeichnet, dass** der Bearbeitungsstation (308) zum Hautritzen in Förderrichtung (F) wenigstens eine Enthäutevorrichtung (309, 310) mit Greifelementen zum Erfassen der mittels der Bearbeitungsstation (308) zum Hautritzen geritzten Haut nachgeordnet ist.

12. Stützkörper (15), eingerichtet zur Ausbildung der Anordnung (1) zum Hautritzen nach einem der Ansprüche 1 bis 9, wobei der Stützkörper (15), der zum Aufsatteln und Transportieren eines geschlachteten Tierkörpers, insbesondere eines Geflügelköpers, ausgebildet ist, eine sattelartige Form mit oberer Sitzfläche (151) und längsseitigen Seitenflächen (152) aufweist, wobei wenigstens ein Abschnitt jeder längsseitigen Seitenfläche (152) als Steuerfläche (16) ausgebildet ist, die eine Anlagefläche für ein ein Ritzelement (12) haltendes Gleitelement (14) bildet sowie im Bereich zu ritzender Haut der aufsattelbaren Tierkörper ausgebildet ist, und wobei zugehörig zur genannten Steuerfläche (16) in wenigstens einem Abschnitt jeder längsseitigen Seitenfläche (152) eine Längsnut (17) ausgebildet ist, in die das genannte Ritzelement (12) bei Anlage des genannten Gleitelements (14) gegen die zugehörige Steuerfläche (16) berührungslos einfassen kann.

13. Stützkörper nach Anspruch 12, **dadurch gekennzeichnet, dass** die Steuerflächen (16) des Stützkörpers (15) an Längsränder der Längsnuten (17) angrenzen.

14. Stützkörper nach Anspruch 12 oder 13, **dadurch gekennzeichnet, dass** die längsseitigen Seitenflächen (152) bauchig konvex geformt sind und die zugehörige Längsnut (17) durch eine wenigstens im Wesentlichen gerade, durch den bauchigen Bereich durchgehende spaltartige Ausnehmung gebildet ist.

15. Stützkörper nach einem der Ansprüche 12 bis 14, **dadurch gekennzeichnet, dass** der Stützkörper (15) zum Aufsatteln eines Geflügelkörpers in Form einer Geflügelvorderhälfte eingerichtet und ausgebildet ist und dass die Längsnuten (17) in Höhe der Atmungsfalten der aufsattelbaren Vorderhälften angeordnet sind.

16. Verfahren zum beidseitigen längsseitigen Ritzen der Haut von geschlachteten Tierkörpern, die auf einer Reihe von Stützkörpern (15) zur Transportförderung und Bearbeitung aufgesattelt werden, wobei einen Durchgang (11) für die Stützkörper (15) bestimmende, quer zur Förderrichtung (F) der Stützkörper (15) bewegbare Ritzelemente (12) zum Herstellen von Längsritzen an Längsseiten der geförderten Tierkörper gesteuert werden, **dadurch gekennzeichnet, dass** der Ritz an jeder Längsseite des Tierkörpers parallel zu einer Anlagespur eines entlang dieser Anlagespur auf der Außenseite des Tierkörpers gleitenden Gleitelements (14) angebracht wird und dass mittels jedes Gleitelements (14) das zugehörige Ritzelement (12) derart gehalten und geführt wird, dass es bei sich verändernder Größe des Durchgangs (11) stets von dem Stützkörper (15) freigehalten wird, wobei es in einen mit dem Ritz deckungsgleich verlaufenden, an jedem Stützkörper (15) ausgebildeten Luftspalt (170) berührungsfrei eintauchen kann.

17. Verfahren nach Anspruch 16, **dadurch gekennzeichnet, dass** die Tierkörper nach Anbringen der Hautritze enthäutet werden, wobei durch die Hautritze entstehende Hautabschnitte zum Enthäuten ergriffen werden.

18. Verfahren nach Anspruch 16 oder **17, dadurch gekennzeichnet, dass** Haut von getrockneten Tierkörpern geritzt wird.

19. Verfahren nach einem der Ansprüche 16 bis 18, **dadurch gekennzeichnet, dass** die Ritze entlang von Atmungsfalten des Tierkörpers geschnitten werden.

20. Verfahren nach einem der Ansprüche 16 bis 19, **dadurch gekennzeichnet, dass** Tierkörper, die Vorderhälften von Geflügelkörpern sind, mit den Ritzen geritzt werden.

## Claims

1. An arrangement (1) for the lateral slitting of the skin at both sides of a slaughtered animal, in a position saddled on a support body (15), comprising a passage way (11) associated to the passing through of the support body (15), which extends in the direction of the passage way (D), formed by a pair of slitting elements (12) for making the slits, which can be moved by means of a control at least substantially transversely to the direction of the passage way (D), and a control means (13) for implementing the control movements, **characterized in that** the control means (13) is formed by a pair of sliding elements (14), which are moveable transversely to the direction of the passage way (D) and are set up for sliding contact, with slitting elements (12) of the pair of slitting elements, which are arranged thereon and protrude therefrom transversely to the direction of the passage way (D), by control surfaces (16), which are associated to the sliding elements (14), and are formed laterally on both sides of the support body (15) and against which the sliding elements (14) are moveable to bring about a control deflection which changes the width of the passage way (11) as well as by longitudinal grooves (17) formed laterally on both sides of the support body (15), which extend corresponding to the direction of the passage way (D) and are associated to the slitting elements (12) and into which the protruding slitting elements (12) can be plunged freely.

2. Arrangement according to claim 1, **characterized in that** the control surfaces (16) are designed on the support body (15) in the region of the skin to be slit of animal bodies that can be saddled.

3. Arrangement according to claim 1 or 2, **characterized in that** the control surfaces (16) of the support body (15) adjoin the longitudinal grooves (17).

4. Arrangement according to any one of claims 1 to 3, **characterized in that** the control means (13) that are associated and connected with both sliding elements (14) comprise restoring devices (18), creating contact and restoring forces for the sliding abutment of the sliding elements (14).

5. Arrangement according to claim 4, **characterized in that** at least one of said restoring devices (18) comprises a swivelling device (181) with a pivot axis (180), about which the associated sliding element (14) is held pivotably for the sliding abutment.

6. Arrangement according to any one of claims 1 to 5, **characterized in that** the control means (13) is equipped with at least one adjusting means (182) for adjusting a basic passage width of the passage way (11), starting from which the width of the passage way can be enlarged in accordance with the control deflection.

7. Arrangement according to any one of claims 1 to 6, **characterized in that**, in relation to a saddle height of the support body (15), the sliding elements (14) carry the slitting elements (12) at a height which is associated to the respiratory folds of animal bodies which can be saddled.

8. Arrangement according to any one of claims 1 to 7, **characterized in that** at least one slitting element (12) is adjustable in height in a direction corresponding to a gap width (171) of the associated longitudinal groove (17).

9. Arrangement according to any one of claims 1 to 8, **characterized in that** the sliding elements (14) have sliding surfaces (140), beyond which the slitting elements (12) protrude depending on the thickness of the skin of the animal body that is to be slit.

10. A processing machine (3) for filleting slaughtered animal bodies, namely poultry bodies, with a transport conveyor (4) forming an upper run (41) and a lower run (42) which is arranged in an endlessly revolving manner in the conveying direction (F) and with a plurality of processing stations (30), wherein a series of support bodies (15) for accommodating a poultry body each is arranged on the transport conveyor (4), **characterized in that**, in a processing station (308) equipped for slitting the skin according to the arrangement according to any one of claims 1 to 9, the control means (13) is provided together with each support body (15), wherein all support bodies (15) are designed with the control surfaces (16) as well as the lateral longitudinal grooves (17) for keeping the slitting elements (12) away from the support bodies (15).

11. Processing machine according to claim 10, **characterized in that** at least one skinning device (309, 310) with gripping elements for gripping the skin slit by means of the processing station (308) for slitting the skin is, in the conveying direction (F), arranged downstream of the processing station (308) for slitting the skin.

12. A support body (15), equipped for forming the arrangement (1) for slitting the skin according to any one of claims 1 to 9, wherein the support body (15), which is designed for saddling and transporting a slaughtered animal body, in particular a poultry body, has a saddle-like shape with a top seat surface (151) and longitudinal side surfaces (152), wherein at least one section of each longitudinal side surface (152) is designed as a control surface (16), which forms an abutment surface for a sliding element (14) holding a slitting element (12) as well as in the region of the skin to be slit of animal bodies that can be saddled, and wherein a longitudinal groove (17) is designed, associated to said control surface (16), in at least one section of each longitudinal side surface (152), in which said slitting element (12) can engage without making contact, when said sliding element (14) abuts on the associated control surface (16).

13. Support body according to claim 12, **characterized in that** the control surfaces (16) of the support body (15) adjoin the longitudinal edges of the longitudinal grooves (17).

14. Support body according to claim 12 or 13, **characterised in that** the longitudinal side surfaces (152) are formed bulbously convexly and the associated longitudinal groove (17) is formed by an at least substantially straight gap-like recess which runs through the bulbous region.

15. Support body according to any one of claims 12 to 14, **characterized in that** the support body (15) is equipped and designed for saddling a poultry body in the form of a poultry front half and that the longitudinal grooves (17) are arranged at the height of the respiratory folds of the front halves that can be saddled.

16. A method for the lateral cutting of the skin on both sides of slaughtered animal bodies, which are saddled on a series of support bodies (15) for transporting and processing, wherein slitting elements (12) determining a passage way (11) for the support body (15) and moveable transversely to the conveying direction (F) of the support bodies (15) are controlled for making longitudinal slits at the longitudinal sides of the conveyed animal body, **characterized in that** the slit at each longitudinal side of the animal body is made parallel to an abutment track of a sliding element (14) sliding along this abutment track on the outside of the animal body, and that by means of each sliding element (14) the associated slitting element (12) is held and guided such that when the size of the passage way (11) changes it is always kept free from the support body (15), wherein it can plunge, without making contact, into an air gap (170) designed on each support body (15) and running coincidently with the slit.

17. Method according to claim 16, **characterized in that** the animal bodies are skinned after the slits have been made, wherein the skin sections created through the slitting of the skin are gripped for skinning.

18. Method according to claim 16 or 17, **characterized in that** the skin of dried animal bodies is slit.

19. Method according to any one of claims 16 to 18, **characterized in that** the slits are made along respiratory folds of the animal body.

20. Method according to any one of claims 16 to 19, **characterized in that** animal bodies, which are front halves of poultry bodies, are slit by means of the slits.

## Revendications

1. Agencement (1) permettant d'entailler latéralement des deux côtés la peau d'un corps d'animal abattu dans une position portée sur un corps d'appui (15), comprenant un passage (11) qui est associé au passage du corps d'appui (15) et qui s'étend dans une direction de passage (D), formé par une paire d'éléments d'entaille (12) mobiles perpendiculairement au sens du passage (D) au moyen d'une commande et destinés à pratiquer les entailles, et un moyen de commande (13) destiné à réaliser les déplacements de commande, **caractérisé en ce que** le moyen de commande (13) est formé par une paire d'éléments de glissement (14), mobiles perpendiculairement au sens du passage (D) et montés pour un contact par glissement, qui présentent des éléments d'entaille (12) de la paire d'éléments d'entaille disposés à ce niveau et qui font saillie perpendiculairement au sens du passage (D), par des surfaces de commande (16) coordonnées aux éléments de glissement (14) et qui sont exécutées latéralement des deux côtés du corps d'appui (15), contre lesquelles les éléments de glissement (14) sont mobiles pour provoquer une déviation de commande modifiant la largeur du passage (11), ainsi que par des rainures longitudinales (17) formées des deux côtés latéralement au niveau du corps d'appui (15), qui s'étendent conformément au sens du passage (D) et sont coordonnées aux éléments d'entaille (12), dans lesquelles les éléments d'entaille faisant saillie peuvent plonger librement.

2. Agencement selon la revendication 1, **caractérisé en ce que** les surfaces de commande (16) sont formées au niveau du corps d'appui (15) dans la zone de la peau à entailler du corps d'animal qui peut être porté.

3. Agencement selon la revendication 1 ou 2, **caractérisé en ce que** les surfaces de commande (16) du corps d'appui (15) confinent aux rainures longitudinales (17).

4. Agencement selon l'une des revendications 1 à 3, **caractérisé en ce que** le moyen de commande (13) comprend, pour le placement glissant des éléments de glissement (14), des dispositifs de rappel (18) reliés de façon correspondante aux deux éléments de glissement (14) et générant une force de placement et de rappel.

5. Agencement selon la revendication 4, **caractérisé en ce qu'**au moins un dispositif de rappel nommé (18) comporte un dispositif de pivotement (181) qui comporte un axe de pivotement (180) autour duquel l'élément de glissement correspondant (14) est retenu de façon à pouvoir pivoter pour le placement glissant.

6. Agencement selon l'une des revendications 1 à 5, **caractérisé en ce que** le moyen de commande (13) est équipé d'au moins un moyen de réglage (182) permettant de régler une largeur de passage de base du passage (11), à partir de laquelle la largeur de passage peut être agrandie en fonction de la déviation de commande.

7. Agencement selon l'une des revendications 1 à 6, **caractérisé en ce que** les éléments de glissement (14) portent les éléments d'entaille (12), en référence à une hauteur de portée du corps d'appui (15), à une hauteur qui est associée aux plis correspondant aux organes respiratoires du corps d'animal porté.

8. Agencement selon l'une des revendications 1 à 7, **caractérisé en ce qu'**au moins un élément d'entaille (12) est réglable en hauteur dans une direction qui correspond à la largeur de fente (171) de la rainure longitudinale associée (17).

9. Agencement selon l'une des revendications 1 à 8, **caractérisé en ce que** les éléments de glissement (14) présentent des surfaces de glissement (140) au-delà desquelles les éléments d'entaille (12) font saillie chacun en fonction de l'épaisseur de la peau à entailler du corps d'animal.

10. Machine de traitement (3) destinée à prélever des filets de corps d'animaux abattus, à savoir de corps de volailles, comportant un convoyeur de transport (4) disposé en boucle sans fin dans une direction d'avance (F) et formant un brin supérieur (41) et un brin inférieur (42) et comportant plusieurs postes de traitement (30), où sont disposés au niveau du convoyeur de transport (4) une série de corps d'appui (15) destinés à supporter chacun un corps de volaille, **caractérisée en ce que** dans un poste de traitement (308) installé pour entailler la peau selon l'agencement selon l'une des revendications 1 à 9, le moyen de commande (13) est prévu avec chaque corps d'appui (15), où tous les corps d'appui (15) sont exécutés avec les surfaces de commande (16) et les rainures longitudinales latérales (17) de façon à tenir les éléments d'entaille (12) dégagés des corps d'appui (15).

11. Machine de traitement selon la revendication 10, **caractérisée en ce qu'**après le poste de traitement (308) destiné à entailler la peau est placé dans le sens d'avance (F) au moins un dispositif d'écorchage (309, 310) comportant des éléments de prise destinés à saisir la peau entaillée au moyen du poste de travail (308) d'entaille de peau.

12. Corps d'appui (15) équipé pour exécuter l'agencement (1) d'entaille de peau selon l'une des revendications 1 à 9, où le corps d'appui (15), qui est conçu pour porter et transporter un corps d'animal abattu, en particulier un corps de volaille, présente une forme de selle avec surface d'assise supérieure (151) et surfaces latérales longitudinales (152), où au moins un segment de chaque surface latérale longitudinale (152) est conçu comme une surface de commande (16) qui forme une surface d'appui d'un élément de glissement (14) qui retient un élément d'entaille (12), et est exécutée dans la zone de la peau à entailler du corps d'animal porté, et où, d'une façon qui correspond à la surface de commande nommée (16), dans au moins un segment de chaque surface latérale longitudinale (152) est formée une rainure longitudinale (17) dans laquelle l'élément d'entaille (12) nommé peut s'enchâsser sans contact lors du placement de l'élément de glissement nommé (14) contre la surface de commande correspondante (16).

13. Corps d'appui selon la revendication 12, **caractérisé en ce que** les surfaces de commande (16) du corps d'appui (15) confinent aux bords longitudinaux des rainures longitudinales (17).

14. Corps d'appui selon l'une des revendications 12 à 13, **caractérisé en ce que** les surfaces latérales longitudinales (152) sont formées en étant renflées de façon convexe et la rainure longitudinale correspondante (17) est formée par un évidement en forme de fente, au moins essentiellement droit, traversé par la zone ventrue.

15. Corps d'appui selon l'une des revendications 12 à 14, **caractérisé en ce que** le corps d'appui (15) est installé et exécuté pour porter un corps de volaille sous la forme d'une moitié avant de volaille, et **en ce que** les rainures longitudinales (17) sont disposées à hauteur des plis correspondant aux organes respiratoires des moitiés avant portées.

16. Procédé d'entaillage longitudinal des deux côtés de la peau de corps d'animaux abattus qui sont portés sur une série de corps d'appui (15) pour le déplacement de transport et le traitement, dans lequel des éléments d'entaille (12) mobiles perpendiculairement au sens de déplacement (F) du corps d'appui (15), déterminant un passage (11) pour le corps d'appui (15), sont commandés pour réaliser des entailles longitudinales au niveau des côtés longitudinaux du corps d'animal transporté, **caractérisé en ce que** l'entaille au niveau de chaque côté longitudinal du corps d'animal est pratiquée parallèlement à une trace de placement d'un élément de glissement (14) qui glisse le long de cette trace de placement sur le côté externe du corps d'animal, et **en ce que**, au moyen de chaque élément de glissement (14), l'élément d'entaille correspondant (12) est maintenu et guidé de façon telle qu'il est toujours tenu éloigné du corps d'appui (15) quand la taille du passage (11) se modifie, suite à quoi il peut toujours plonger sans contact dans une fente (170) formée au niveau de chaque corps d'appui (15) et qui s'étend sur la même surface que l'entaille.

17. Procédé selon la revendication 16, **caractérisé en ce que** les corps d'animaux sont écorchés suite à la réalisation des entailles de peau, les segments de peau formés par les entailles de peau étant saisis pour l'écorchage.

18. Procédé selon la revendication 16 ou 17, **caractérisé en ce que** la peau de corps d'animaux séchés est entaillée.

19. Procédé selon l'une des revendications 16 à 18, **caractérisé en ce que** les entailles sont découpées le long des plis des organes respiratoires du corps d'animal.

20. Procédé selon l'une des revendications 16 à 19, **caractérisé en ce que** les corps d'animaux, qui sont des moitiés avant de corps de volailles, sont entaillés par les entailles.
